# EUROPEAN PATENT SPECIFICATION

(11) **EP 3 577 287 B1**
(45) Date of publication and mention of the grant of the patent: **30.12.2020**
(21) Application number: 18709383.6
(22) Date of filing: 30.01.2018
(51) Int. Cl.: E04B 9/18, E04B 9/34

(54) **SECURING ASSEMBLY**
SICHERUNGSANORDNUNG
ENSEMBLE DE FIXATION

(30) Priority: 02.02.2017 GB 201701736; 23.01.2018 GB 201801095
(43) Date of publication of application: 11.12.2019
(73) Proprietor: Gripple Limited, Sheffield, South Yorkshire S4 7UQ (GB)
(72) Inventor: FISHER, Thomas Edward Francis, Sheffield, South Yorkshire S6 5BA (GB)
(86) International application number: PCT/GB2018/000018
(87) International publication number: WO 2018/142098

(56) References cited:
- GB-A- 2 378 999
- GB-A- 2 509 807
- US-B1- 8 413 398

## Description

This invention relates to securing assemblies. More particularly, but not exclusively, this invention relates to securing devices for use in suspending panels, for example, acoustic panels. This invention also relates to insertion arrangements for use in securing assemblies.

Acoustic panels can be suspended from ceilings by the use of cables attached to suitable fixings, such as, pins. However, such fixings can be disadvantageous where it is desired to suspend the panels in more than one layer.

US 8413398 B1 discloses ball pivot assemblies for mounting panels to a cable. The ball pivot includes geometry configured to enable a panel to pivot about the ball pivot in a plurality of orientations in a plurality of planes with respect to the cable. One or more implementations of the present invention can include a ball socket configured to receive the ball pivot, and provide a secure interface between the ball pivot assembly and the panel. Also, systems of at least one implementation of the present invention include a plurality of panels mounted to one or more cables using one or more ball pivot assemblies. In addition, one or more implementations of the present invention include methods of mounting panels using one or more ball pivot assemblies.

GB 2378999 A discloses a method of suspending equipment from an overhead member. The method comprises providing at least two suspension strands with means for securing them to the overhead member, passing the free ends of the strands through a pair of eyes on the equipment, or through a hole in an elongate member for supporting the equipment. After passing through the eyes or holes, the free ends of the strands are passed through locking devices of the type having a bore associated with wedging means preventing withdrawal of the respective strand in the opposite direction. Kits for use in the method are also disclosed. Wedge release means for adjusting the position of the locking devices are also disclosed.

According to one aspect of this invention, there is provided a securing assembly for use in suspending an article, the securing assembly comprising:
an insertion arrangement for insertion into the article, the insertion arrangement comprising an insertion portion to be inserted into the article;
an attaching arrangement for attaching the insertion arrangement to a connector, the connector being configured to connect the securing assembly to an elongate suspending member;
wherein the attaching arrangement further includes a fastening formation for fastening the attaching arrangement to the connector; and
wherein each of the insertion portion and the attaching arrangement define a respective through passage to allow the suspending member to be inserted through the securing assembly;
characterised in that the insertion portion has an external thread thereon; and further characterised in that the insertion arrangement and the attaching arrangement comprise cooperating joining formations to join the attaching arrangement to the insertion arrangement.

The invention may provide a method of using a securing assembly as described in the immediately preceding paragraph may be provided, said method comprising inserting the insertion arrangement into an article, and connecting the connector to the elongate suspending member.

The method may further include disposing the elongate suspending member through the passages in the insertion arrangement and the attaching arrangement, and through the article to a further securing assembly and a further article.

The elongate suspending member may comprise a cable, wire, wire rope or the like.

The method may include forming a bore in the article when the insertion arrangement is inserted therein. The step of forming the bore may comprise pushing a piercing tool through the passage in the insertion arrangement and through the article.

The article may be an insulation panel, such as an acoustic insulation panel.

The passage extending through the insertion arrangement may be substantially coaxially aligned with the passage extending through the attaching arrangement.

The insertion arrangement may comprise an insertion portion to be inserted into the article.

The invention may provide an insertion arrangement comprising an insertion portion for insertion into an article, and a cooperating joining formation for joining the insertion arrangement to an attaching arrangement, wherein the insertion portion defines a through passage to allow a suspending member to be inserted therethrough.

The insertion arrangement may further include a load spreading portion on the insertion portion. The load spreading portion may extend radially outwardly from the insertion portion.

The insertion portion may be conical. The thread on the insertion portion may be conical. The method may comprise screwing the insertion arrangement into the article.

The load spreading portion may extend radially outwardly from the insertion portion. In one embodiment, the load spreading portion may comprise a first flange which may extend radially outwardly from the insertion portion.

The insertion portion may define a tool receiving cavity to receive a tool, the tool being configured to drive the insertion arrangement into the article. The tool receiving cavity may extend inwardly from an opening in the insertion portion.

The tool receiving cavity may include a polygonal socket to receive the tool. The tool may be a key which can be used to drive the insertion arrangement into the article. The method may comprise inserting the insertion arrangement into the article, putting a key in the socket and rotating the key to drive the insertion arrangement further into the article.

The invention may provide an attaching arrangement for attaching an insertion arrangement to an elongate suspending member, the attaching arrangement comprising a cooperating joining formation for joining the attaching arrangement to an insertion arrangement, wherein the attaching arrangement defines a through passage to allow a suspending member to be inserted therethrough.

The attaching arrangement may comprise a guide member which can be received by the insertion arrangement. The passage in the attaching arrangement may extend through the guide member. The guide member may be received in the tool receiving cavity. The passage in the attaching arrangement may extend through the guide member.

The guide member may be configured to guide the elongate suspending member into the through passage defined by the insertion arrangement. The elongate suspending member is arranged through the guide member so that the elongate suspending member extends through the passage in the insertion arrangement. The method may comprise arranging the elongate suspending member through the guide member so that the elongate suspending member extends through the passage in the insertion arrangement.

A first joining formation may be provided on the insertion portion of the insertion arrangement. A second joining formation may be provided on the guide member of the attaching arrangement.

The first and second joining formations may comprise respective first and second projecting members. The first projecting member may engage the second projecting member to join the attaching arrangement to the insertion arrangement.

The attaching arrangement may be joined to the insertion arrangement by the second projecting member engaging behind the first projecting member.

One of the first and second projecting members may extend over a receiving formation defined by the insertion arrangement or the attaching arrangement. The other of the first and second projecting members may extend outwardly to be received in the receiving formation.

In the embodiment described herein, the first projecting member may extend over the tool receiving cavity of the insertion arrangement. The first projecting member may be in the form of an overhanging member which overhangs the tool receiving formation. The second projecting member may extend outwardly from the guide member of the attaching arrangement.

The second joining formation may be disposed in the tool receiving cavity. By twisting the attaching arrangement, joining of the insertion arrangement to the attaching arrangement may be effected. The method may comprise disposing the second joining formation in the tool receiving cavity, and twisting the attaching arrangement to effect joining of the insertion arrangement to the attaching arrangement.

The first joining formation may comprise a plurality of the first projecting members. The first joining formation may comprise two of the first projecting members. The second joining formation may comprise a plurality of the second projecting members. The second joining formation may comprise two of the second projecting members.

The attaching arrangement may include an engaging formation for engaging the load spreading portion when the second joining formation is received in the cavity. The engaging formation may comprise a second flange.

The engaging formation and the load spreading portion may include cooperating locking formations to lock the attaching arrangement and the insertion arrangement to each other when they are joined together. The locking formations may comprise a detent arrangement. The locking formations may comprise a sloping indentation and a sloping protrusion which can cooperate with each other to lock the load spreading portion and the engaging formation to each other. The locking formations may comprise a pair of sloping indentations and a pair of sloping protrusions.

A gap may be defined between the second joining formation and the engaging formation. The attaching arrangement may be joined to the insertion arrangement by the first joining formation being received in the gap between the second joining formation and the engaging formation.

The first joining formation may comprise a pair of opposed first projecting members, which may be disposed opposite one another across the tool receiving formation. The second joining formation may comprise a pair of the second projecting members, which may extend opposite each other from the guide member.

The fastening formation may be threaded so that the connector and the attaching arrangement can be fastened to each other by screwing one into the other. The method may comprise fastening the attaching arrangement and the connector to each other by screwing one into the other.

The attaching formation may include a threaded lug. The threaded lug may be screwed into a threaded bore in the connector to fasten the attaching formation to the connector. The method may comprise screwing the lug into the threaded bore to fasten the attaching formation to the connector.

An embodiment of the invention will now be described by way of example only, with reference to the accompanying drawings, in which:
Figure 1 is a perspective view of an attaching arrangement, forming part of a securing assembly;
Figure 2 is a perspective view of an insertion arrangement, forming another part of the securing assembly;
Figure 3 is a perspective view of the securing assembly;
Figure 4 is a sectional side view of the securing assembly;

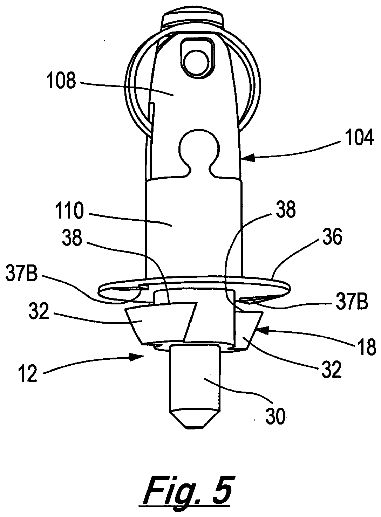

Figure 5 is a side view showing the attaching arrangement fastened to a connector;
Figure 6 is a perspective view of the attaching arrangement and the connector before the attaching arrangement is joined to the insertion arrangement;
Figure 7 is a perspective view showing the securing assembly fastened to a connector;
Figure 8 is a sectional side view of the connector fastened to the securing assembly;
Figures 9 to 14 show the steps of one method of securing an elongate suspending member to an article; and
Figures 15 and 16 show two steps of a further method of securing an elongate suspending member to an article.

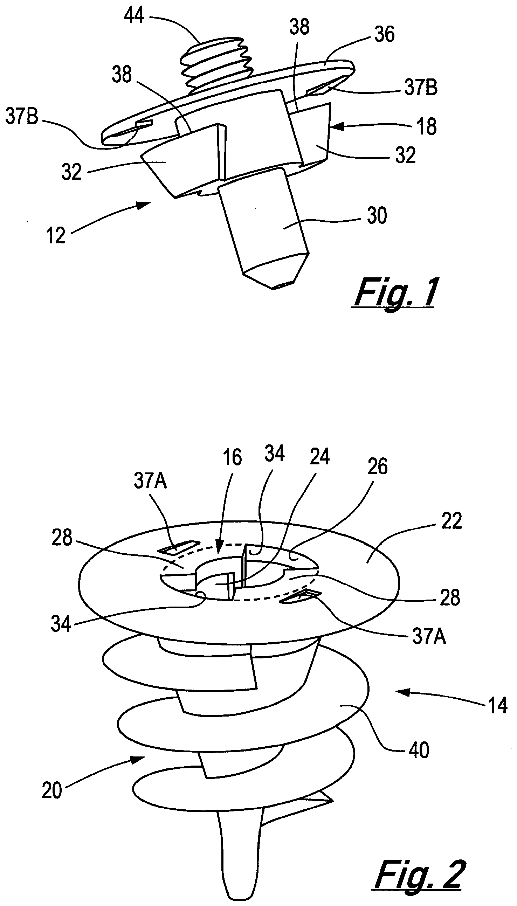

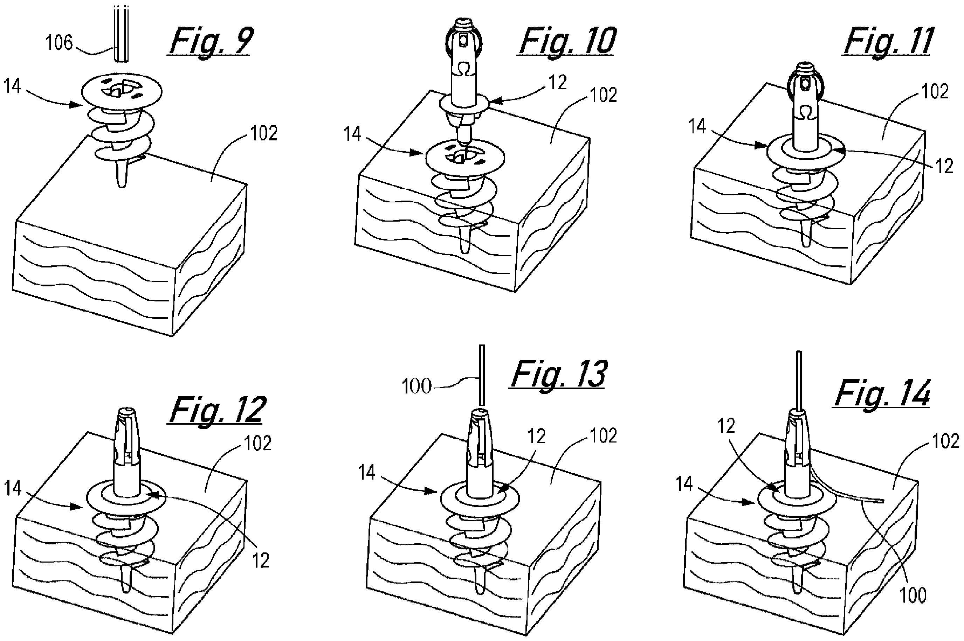

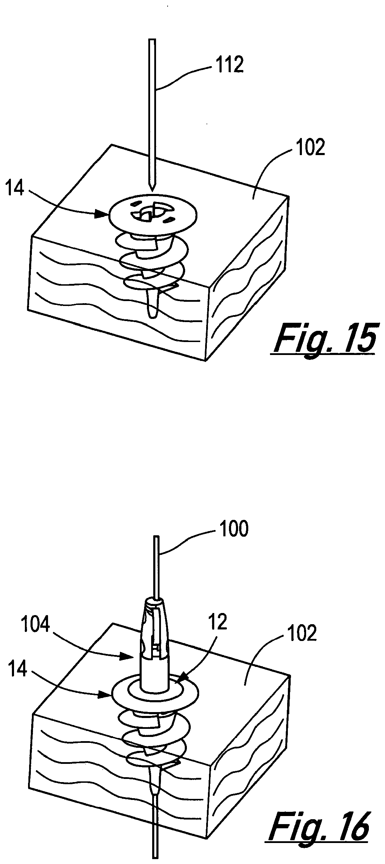

Figures 1 and 2 show two parts of a securing assembly 10 for securing an elongate suspending member, in the form of a cable 100 (see Figures 14 and 16), to an article, in the form of an acoustic insulation panel 102 (see Figures 9 to 16). The securing assembly 10 is shown assembled in Figures 2, 3 and 4.

The securing assembly 10 comprises an attaching arrangement 12 and an insertion arrangement 14. The attaching arrangement 12 attaches the securing assembly 10 to a connector 104. The insertion arrangement 12 can be inserted into the insulation panel 102 to affix the securing assembly 10 thereto.

The insertion arrangement 14 comprises a first joining formation 16. The attaching arrangement 12 comprises a second joining formation 18. The first and second joining formations 16, 18 cooperate with each other to join the attaching arrangement 12 to the insertion arrangement 14.

The insertion arrangement 14 comprises an insertion portion 20 and a radially outwardly extending load spreading first flange 22 extending from the insertion portion 20. The insertion portion 20 defines a cavity 24 having an opening 26. The joining formations 18 of the insertion arrangement 14 comprise a pair of inwardly extending opposed first projecting members, in the form of overhanging members 28 which overhang the cavity 24.

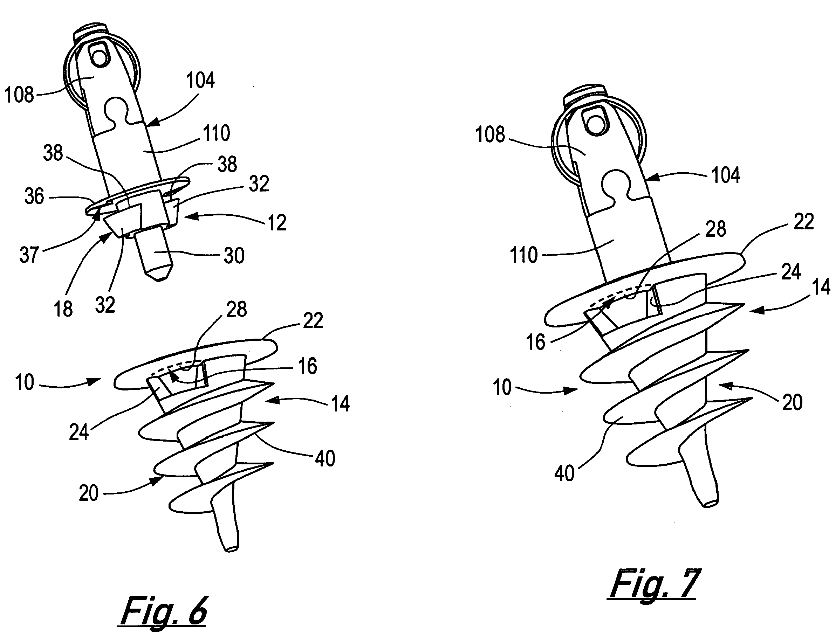

The overhanging members 28 extend over the cavity 24 to define the opening 26. The projecting members 28 are shown by the broken lines in Figures 2, 3, 6 and 7.

The attaching arrangement 12 comprises a guide member 30, the purpose of which is explained below. The second joining formations 18 comprise a pair of oppositely radially outwardly extending second projecting members 32 on the guide member 30. The second projecting members 32 overhang the cavity 24. A pair of opposed entry recesses 34 are defined between the overhanging members 28 to allow the second joining formations 18 of the attaching arrangement 12 to be received in the cavity 24.

The second projecting members 32 are of the same size and shape as the entry recesses 34, thereby allowing the second projecting members 32 to be received in the cavity 24.

The attaching arrangement 12 further includes an engaging formation in the form of a second flange 36 extending over the second projecting members 32. A respective gap 38 is defined between each second projecting member 32 and the second flange 36. The second flange 36 engages the first flange 22 when the second projecting members 32 are received in the cavity 24.

The attaching arrangement 12 is joined to the insertion arrangement 14 by inserting the second projecting members 32 through the opening 26 so that the second projecting members 32 pass through the entry recesses 34 to be received in the cavity 24. When so received, the attaching arrangement 12 can be twisted by 90° so that the overhanging members 28 are received in gaps 38, thereby joining the attaching arrangement 12 to the insertion arrangement 14.

The first and second flanges 22, 36 comprise cooperating locking formations in the form of a detent arrangement 37 comprising a pair of sloping indentations 37A on the first flange 22 and a corresponding pair of sloping protrusions 37B. The protrusions 37B are received in the indentations 37A when the overhanging members 28 are received in the gaps 38 to lock the attaching arrangement 12 to the insertion arrangement 14.

The insertion portion 20 includes a thread 40, which is configured to allow the insertion portion 20 to be screwed into the insulation panel 102. The cavity 24 includes a socket 42, which may be a hexagonal socket. A driver 106 (see Figure 9), which may be in the form of a key having a hexagonal profile (known as a "hex key"), is inserted into the socket 42 to screw the insertion portion 20 into the insulation panel 102.

The attaching arrangement 12 further includes fastening formation in the form of a threaded lug 44. The threaded lug 44 is screwed into the connector 104 to fasten the attaching arrangement 12 thereto.

The connector 104 comprises a clamping part 108 and a connecting part 110. The clamping part 108 can be any suitable clamping part, such as a clamping assembly disclosed in published patent application No. GB 2509807 A. The connecting part 110 may be the same as the ancillary member disclosed in GB 2509807 A, having a sloping from which the cable 100 exits to one side via a side opening, as shown in Figure 15. Alternatively, the connecting part 110 may define a through passage extending from one end to the other to allow the cable 100 to extend straight through the connecting part 110, as shown in Figure 10.

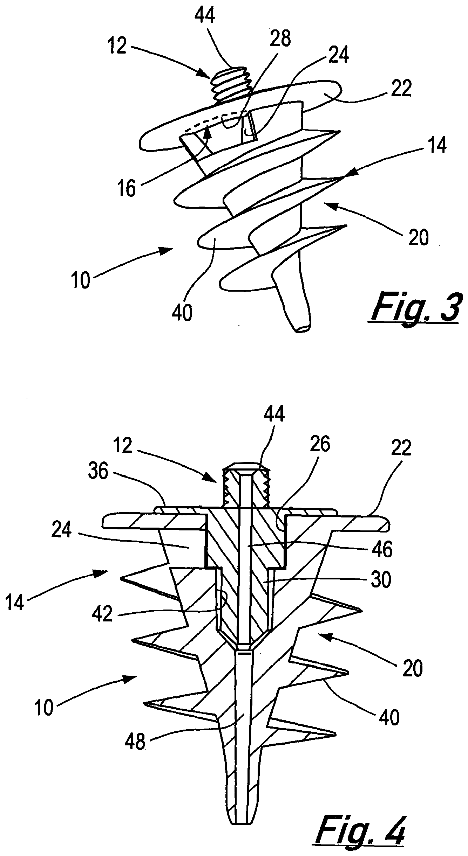

As shown in Figure 4, the attaching arrangement 12 and the insertion arrangement 14 define respective through passages 46, 48. The through passage 46 in the attaching arrangement 12 extends through the lug 44 and the guide member 30. The through passage 48 in the insertion arrangement 14 extends from the cavity 24 through the insertion portion 20.

As can be seen from Figure 4, the guide member 30 extends into the socket 42, when the attaching arrangement 12 is joined to the insertion arrangement 14. The cable 100 is thereby guided by the guide member 30 from the passage 46 into the passage 48 when the cable 100 is pushed thought the securing assembly 10 from the connector 104.

Referring to Figures 9 to 14, a method of using the securing device 10 is shown. Figure 9 shows the insertion of the insertion assembly 14 into the insulation panel 102. The driver 106 is inserted into the hexagonal socket 42 to screw the threaded insertion portion 20 into the insulation panel 102.

Figure 10 shows the attaching arrangement 12 being joined to the insertion arrangement 14. The attaching arrangement 12 is fastened to a connector 104, which includes the clamping part 108 and the connecting part 110. In Figures 10 to 14, the connecting part 110 has a sloped wall so that the cable 100 extends out of the connecting part 108 at the side thereof, as shown in Figure 14.

The attaching arrangement 12 is arranged on the insertion arrangement 14, as shown in Figure 11, with the overhanging members 28 of the attaching arrangement 12 received within the cavity 24. The attaching arrangement 12 and the connector 104 are then twisted in the same direction as the insertion portion 20 was screwed into the insulation panel 102.

In the position shown in Figure 12, the overhanging members 28 are received in the gap 38 between the second projecting members 32 and the second flange 36, thereby joining the attaching arrangement 12 and the insertion arrangement 14 to each other.

The cable 100 is then inserted through the clamping part 108 of the connector to pass out of the side of the connecting part 110, as shown in Figure 14. A plurality of the securing assemblies can be attached to the insulation panel 102 to secure the insulation panel 102 to respective cables 100. The upper ends can be attached to a roof, ceiling or other upper support to suspend the insulation panels therefrom.

Figures 15 and 16 show a further method of using the securing assembly 10. The method shown in Figures 15 and 16 differs from the method shown in Figures 9 to14 in that the connecting part 110 has a passage straight through that extends coaxially along its whole length with the passages 46, 48 in the insertion arrangement 12 and the attaching arrangement 14.

The first step of insertion of the insertion member 14 into the insulation panel 102 is the same as shown in Figure 9 and is therefore not shown again.

Figure 15 shows the step of piercing the insulation panel 102. A piercing tool 112 is inserted through the connector 104 and through the passages 46, 48 to pierce through the insulation panel 102 to create a channel therethrough to allow the cable 100 to be pushed through the insulation panel 102.

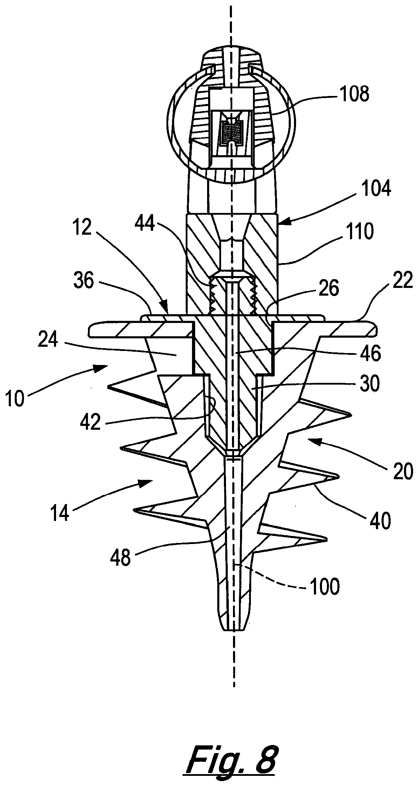

The subsequent steps in this method are the same as shown in Figures 10 to 13 and are therefore not shown again. Figure 16 shows the final step, in which the cable 100 extends through the passages 46, 48 and through the channel pierced through the insulation panel 102. Figure 8 shows the cable 100 extending through the passages 46, 48 and through the connector 104. In Figure 8, the cable 100 is shown by a broken line.

The cable 102 can be threaded through the insulation panel 102 to a further article (not shown) beneath the insulation panel 102 shown. Additional securing assemblies are mounted on the further article to allow it to be secured to the cable 102. The further article can be a further insulation panel or another suitable article, for example, a lighting assembly or a cable tray.

There is thus described a securing assembly 10 that can be used to secure an insulation panel 102 to a cable 100 and, thereby, suspend the insulation panel 102 on the cable 100. The securing assembly 10 defines passages 46, 48 therethrough to allow the cable 100 to extend through the securing assembly 10 and through the insulation panel 102 to a further insulation panel and securing assembly below to suspend the further insulation panel beneath the insulation panel 102.

Various modifications can be made without departing from the scope of the invention. For example, other articles exist which can be used with the securing assembly 10, and which can be suspended by means of the securing assembly 10. Such articles can either be formed of a material into which the insertion portion 20 can be screwed, or have suitable threaded holes pre-formed therein.

## Claims

1. A securing assembly (10) for use in suspending an article (102), the securing assembly (10) comprising:
an insertion arrangement (14) for insertion into the article (102), the insertion arrangement (14) comprising an insertion portion (20) to be inserted into the article (102);
an attaching arrangement (12) for attaching the insertion arrangement (14) to a connector (104) configured to connect the securing assembly (10) to an elongate suspending member (100);
wherein the attaching arrangement (12) further includes a fastening formation (44) for fastening the attaching arrangement (12) to the connector (104); and
wherein each of the insertion portion (20) and the attaching arrangement (12) define a respective through passage (46, 48) to allow the suspending member (100) to be inserted through the securing assembly (10);
**characterised in that** the insertion portion (20) has an external thread (40) thereon; and
further **characterised in that** the insertion arrangement (14) and the attaching arrangement (12) comprise cooperating joining formations (16,18) to join the attaching arrangement (12) to the insertion arrangement (14).

2. A securing assembly (10) according to claim 1, wherein the insertion arrangement (14) further includes a load spreading portion (22) on the insertion portion (20), the load spreading portion (22) extending radially outwardly from the insertion portion (20).

3. A securing assembly (10) according to claim 2, wherein the insertion portion (20) defines a tool receiving cavity (24) to receive a tool, the tool being configured to drive the insertion arrangement (14) into the article (102), the tool receiving cavity (24) extending inwardly from an opening in the insertion portion (20).

4. A securing assembly (10) according to claim 3, wherein the attaching arrangement (12) comprises a guide member (30) which can be received in the tool receiving cavity (24), and wherein the passage (46) in the attaching arrangement (12) extends through the guide member (30).

5. A securing assembly (10) according to claim 4, wherein the guide member (30) is configured to guide the elongate suspending member (100) into the through passage (48) defined by the insertion arrangement (14), whereby the elongate suspending member (100) is arranged through the guide member (30) so that the elongate suspending member (100) extends through the passage (48) in the insertion arrangement (14).

6. A securing assembly (10) according to claim 4 or 5, wherein the joining formations (16,18) comprise a first joining formation (16) on the insertion portion (20) of the insertion arrangement (14), and the joining formations (16,18) further include a second joining formation (18) on the guide member (30) of the attaching arrangement (12).

7. A securing assembly (10) according to claim 6, wherein the first and second joining formations (16,18) comprise respective first and second projecting members (28, 32), the first projecting member (28) engaging the second projecting member (32) to join the attaching arrangement (12) to the insertion arrangement (14).

8. A securing assembly (10) according to claim 7, wherein the attaching arrangement (12) is joined to the insertion arrangement (14) by the second projecting member (32) engaging behind the first projecting member (28).

9. A securing assembly (10) according to claim 7 or 8, wherein one of the first and second projecting members (28, 32) extends over a receiving formation defined by the insertion arrangement (14) or the attaching arrangement (12), and the other of the first and second projecting members (28, 32) extends outwardly to be received in the receiving formation.

10. A securing assembly (10) according to any of claims 7, 8 or 9, wherein the first projecting member (28) extends over the tool receiving cavity (24) of the insertion arrangement (14), and the second projecting member (32) extends outwardly from the guide member (30) of the attaching arrangement (12).

11. A securing assembly (10) according to any of claims 7 to 10, wherein the first projecting member (28) is in the form of an overhanging member which overhangs the tool receiving cavity (24), and the second joining formation (18) is disposed in the tool receiving cavity (24), whereby twisting the attaching arrangement (12) effects joining of the insertion arrangement (14) to the attaching arrangement (12).

12. A securing assembly (10) according to any of claims 7 to 11, wherein the attaching arrangement (12) includes an engaging formation (36) for engaging the load spreading portion (22) when the second joining formation (18) is received in the cavity (24).

13. A securing assembly (10) according to claim 12, wherein the load spreading portion (22) comprises a first flange extending radially outwardly from the insertion portion (20), and the engaging formation (36) comprises a second flange

14. A securing assembly (10) according to any of claims 12 or 13, wherein a gap (38) is defined between the second joining formation (18) and the engaging formation (36), the attaching arrangement (12) being joined to the insertion arrangement (14) by the first joining formation (16) being received in the gap (38) between the second joining formation (18) and the engaging formation (36).

15. A securing assembly (10) according to any of claims 7 to 14, wherein the first joining formation (16) comprises a pair of the first projecting members (28) arranged opposite one another across the tool receiving cavity (24), and the second joining formation (18) comprises a pair of the second projecting members (32), which extend opposite each other from the guide member (30).

## Patentansprüche

1. Fixierbaugruppe (10) zur Verwendung beim Aufhängen eines Gegenstands (102), die Fixierbaugruppe (10) umfassend:
eine Einführanordnung (14) zum Einsetzen in den Gegenstand (102), die Einführanordnung (14) umfassend einen Einführabschnitt (20), der in den Gegenstand (102) eingeführt werden soll;
eine Anbringungsanordnung (12) zum Anbringen der Einführanordnung (14) an einem Verbinder (104), der konfiguriert ist, um die Fixierbaugruppe (10) mit einem länglichen Hängeelement (100) zu verbinden;
wobei die Anbringungsanordnung (12) ferner eine Befestigungsanordnung (44) zum Befestigen der Anbringungsanordnung (12) an dem Verbinder (104) beinhaltet; und
wobei jedes von dem Einführabschnitt (20) und der Anbringungsanordnung (12) einen jeweiligen Durchgang (46, 48) definieren, um zu ermöglichen, dass das Hängeelement (100) durch die Fixieranordnung (10) eingeführt wird;
**dadurch gekennzeichnet, dass** der Einführabschnitt (20) ein Außengewinde (40) daran aufweist; und
ferner **dadurch gekennzeichnet, dass** die Einführanordnung (14) und die Anbringungsanordnung (12) zusammenwirkende Verbindungsformationen (16, 18) umfassen, um die Anbringungsanordnung (12) mit der Einführanordnung (14) zu verbinden.

2. Fixierbaugruppe (10) nach Anspruch 1, wobei die Einführanordnung (14) ferner einen lastverteilenden Abschnitt (22) an dem Einführabschnitt (20) beinhaltet, wobei sich der lastverteilende Abschnitt (22) von dem Einführabschnitt (20) radial auswärts erstreckt.

3. Fixierbaugruppe (10) nach Anspruch 2, wobei der Einführabschnitt (20) einen Werkzeugaufnahmehohlraum (24) zum Aufnehmen eines Werkzeugs definiert, wobei das Werkzeug konfiguriert ist, um die Einführanordnung (14) in den Gegenstand (102) zu treiben, wobei sich der Werkzeugaufnahmehohlraum (24) von einer Öffnung in dem Einführabschnitt (20) einwärts erstreckt.

4. Fixierbaugruppe (10) nach Anspruch 3, wobei die Anbringungsanordnung (12) ein Führungselement (30) umfasst, das in dem Werkzeugaufnahmehohlraum (24) aufgenommen werden kann, und wobei sich der Durchgang (46) durch das Führungselement (30) in der Anbringungsanordnung (12) erstreckt.

5. Fixierbaugruppe (10) nach Anspruch 4, wobei das Führungselement (30) konfiguriert ist, um das längliche Hängeelement (100) in den durch die Einführanordnung (14) definierten Durchgang (48) zu führen, wobei das längliche Hängeelement (100) durch das Führungselement (30) angeordnet ist, sodass sich das längliche Hängeelement (100) durch den Durchgang (48) in der Einführanordnung (14) erstreckt.

6. Fixierbaugruppe (10) nach Anspruch 4 oder 5, wobei die Verbindungsformationen (16, 18) eine erste Verbindungsformation (16) an dem Einführabschnitt (20) der Einführungsanordnung (14) umfassen, und die Verbindungsformationen (16, 18) ferner eine zweite Verbindungsformation (18) an dem Führungselement (30) der Anbringungsanordnung (12) umfassen.

7. Fixierbaugruppe (10) nach Anspruch 6, wobei die erste und die zweite Verbindungsanordnung (16, 18) jeweils ein erstes und ein zweites hervorstehendes Element (28, 32) umfassen, wobei das erste hervorstehende Element (28) das zweite hervorstehende Element (32) eingreift, um die Anbringungsanordnung (12) mit der Einführanordnung (14) zu verbinden.

8. Fixierbaugruppe (10) nach Anspruch 7, wobei die Anbringungsanordnung (12) durch das zweite hervorstehende Element (32), das hinter dem ersten hervorstehenden Element (28) eingreift, mit der Einführanordnung (14) verbunden ist.

9. Fixierbaugruppe (10) nach Anspruch 7 oder 8, wobei eines von dem ersten und dem zweiten hervorstehenden Element (28, 32) sich über eine Aufnahmeformation erstreckt, die durch die Einführanordnung (14) oder die Anbringungsanordnung (12) definiert ist, und das andere von dem ersten und dem zweiten hervorstehenden Element (28, 32) sich auswärts erstreckt, um in der Aufnahmeformation aufgenommen zu werden.

10. Fixierbaugruppe (10) nach einem der Ansprüche 7, 8 oder 9, wobei sich das erste hervorstehende Element (28) über den Werkzeugaufnahmehohlraum (24) der Einführanordnung (14) erstreckt und das zweite hervorstehende Element (32) sich von dem Führungselement (30) der Anbringungsanordnung (12) auswärts erstreckt.

11. Fixierbaugruppe (10) nach einem der Ansprüche 7 bis 10, wobei das erste hervorstehende Element (28) in der Form eines überhängenden Elements ist, das über den Werkzeugaufnahmehohlraum (24) überhängt, und die zweite Verbindungsformation (18) in dem Werkzeugaufnahmehohlraum (24) angeordnet ist, wodurch ein Verdrehen der Anbringungsanordnung (12) ein Verbinden der Einführanordnung (14) mit der Anbringungsanordnung (12) bewirkt.

12. Fixierbaugruppe (10) nach einem der Ansprüche 7 bis 11, wobei die Anbringungsanordnung (12) eine Eingriffsformation (36) zum Eingreifen des lastverteilenden Abschnitts (22) beinhaltet, wenn die zweite Verbindungsformation (18) in dem Hohlraum (24) aufgenommen ist.

13. Fixierbaugruppe (10) nach Anspruch 12, wobei der lastverteilende Abschnitt (22) einen ersten Flansch umfasst, der sich von dem Einführabschnitt (20) radial auswärts erstreckt, und die Eingriffsformation (36) einen zweiten Flansch umfasst.

14. Fixierbaugruppe (10) nach einem der Ansprüche 12 oder 13, wobei zwischen der zweiten Verbindungsformation (18) und der Eingriffsformation (36) ein Spalt (38) definiert ist, wobei die Anbringungsanordnung (12) mit der Einführanordnung (14) verbunden ist, indem die erste Verbindungsformation (16) in dem Spalt (38) zwischen der zweiten Verbindungsformation (18) und der Eingriffsformation (36) aufgenommen wird.

15. Fixierbaugruppe (10) nach einem der Ansprüche 7 bis 14, wobei die erste Verbindungsformation (16) ein Paar der ersten hervorstehenden Elemente (28) umfasst, die gegenüber voneinander über den Werkzeugaufnahmehohlraum (24) angeordnet sind, und die zweite Verbindungsformation (18) ein Paar der zweiten hervorstehenden Elemente (32) umfasst, die sich entgegengesetzt voneinander von dem Führungselement (30) erstrecken.

## Revendications

1. Ensemble de fixation (10) à utiliser pour suspendre un article (102), l'ensemble de fixation (10) comprenant :
un agencement d'insertion (14) pour insertion dans l'article (102), l'agencement d'insertion (14) comprenant une partie d'insertion (20) à insérer dans l'article (102) ;
un agencement d'attache (12) pour attacher l'agencement d'insertion (14) à un connecteur (104) configuré pour connecter l'ensemble de fixation (10) à un élément de suspension allongé (100) ;
dans lequel l'agencement d'attache (12) comprend en outre une formation de fixation (44) pour fixer l'agencement d'attache (12) au connecteur (104) ; et
dans lequel chacune de la partie d'insertion (20) et de l'agencement d'attache (12) définissent un passage traversant respectif (46, 48) pour permettre à l'élément de suspension (100) d'être inséré à travers l'ensemble de fixation (10) ;
**caractérisé en ce que** la partie d'insertion (20) a un filetage externe (40) sur celle-ci ; et **caractérisé en outre en ce que** l'agencement d'insertion (14) et l'agencement d'attache (12) comprennent des formations de jonction coopérantes (16, 18) pour joindre l'agencement d'attache (12) à l'agencement d'insertion (14).

2. Ensemble de fixation (10) selon la revendication 1, dans lequel l'agencement d'insertion (14) comprend en outre une partie de répartition de charge (22) sur la partie d'insertion (20), la partie de répartition de charge (22) s'étendant radialement vers l'extérieur depuis la partie d'insertion (20).

3. Ensemble de fixation (10) selon la revendication 2, dans lequel la partie d'insertion (20) définit une cavité de réception d'outil (24) pour recevoir un outil, l'outil étant configuré pour entraîner l'agencement d'insertion (14) dans l'article (102), la cavité de réception d'outil (24) s'étendant vers l'intérieur depuis une ouverture dans la partie d'insertion (20).

4. Ensemble de fixation (10) selon la revendication 3, dans lequel l'agencement d'attache (12) comprend un élément de guidage (30) qui peut être reçu dans la cavité de réception d'outil (24), et dans lequel le passage (46) dans l'agencement d'attache (12) s'étend à travers l'élément de guidage (30).

5. Ensemble de fixation (10) selon la revendication 4, dans lequel l'élément de guidage (30) est configuré pour guider l'élément de suspension allongé (100) dans le passage traversant (48) défini par l'agencement d'insertion (14), moyennant quoi l'élément de suspension allongé (100) est agencé à travers l'élément de guidage (30) de sorte que l'élément de suspension allongé (100) s'étend à travers le passage (48) dans l'agencement d'insertion (14).

6. Ensemble de fixation (10) selon la revendication 4 ou 5, dans lequel les formations de jonction (16, 18) comprennent une première formation de jonction (16) sur la partie d'insertion (20) de l'agencement d'insertion (14), et les formations de jonction (16, 18) comprennent en outre une seconde formation de jonction (18) sur l'élément de guidage (30) de l'agencement d'attache (12).

7. Ensemble de fixation (10) selon la revendication 6, dans lequel les première et seconde formations de jonction (16, 18) comprennent des premier et second éléments en saillie respectifs (28, 32), le premier élément en saillie (28) engageant le second élément en saillie (32) pour joindre l'agencement d'attache (12) à l'agencement d'insertion (14).

8. Ensemble de fixation (10) selon la revendication 7, dans lequel l'agencement d'attache (12) est joint à l'agencement d'insertion (14) par le second élément en saillie (32) s'engageant derrière le premier élément en saillie (28).

9. Ensemble de fixation (10) selon la revendication 7 ou 8, dans lequel l'un des premier et second éléments en saillie (28, 32) s'étend sur une formation de réception définie par l'agencement d'insertion (14) ou l'agencement d'attache (12), et l'autre des premier et second éléments en saillie (28, 32) s'étend vers l'extérieur pour être reçu dans la formation de réception.

10. Ensemble de fixation (10) selon l'une quelconque des revendications 7, 8 ou 9, dans lequel le premier élément en saillie (28) s'étend sur la cavité de réception d'outil (24) de l'agencement d'insertion (14), et le second élément en saillie (32) s'étend vers l'extérieur depuis l'élément de guidage (30) de l'agencement d'attache (12).

11. Ensemble de fixation (10) selon l'une quelconque des revendications 7 à 10, dans lequel le premier élément en saillie (28) a la forme d'un élément en surplomb qui surplombe la cavité de réception d'outil (24), et la seconde formation de jonction (18) est disposée dans la cavité de réception d'outil (24), moyennant quoi la torsion de l'agencement d'attache (12) réalise la jonction de l'agencement d'insertion (14) à l'agencement d'attache (12).

12. Ensemble de fixation (10) selon l'une quelconque des revendications 7 à 11, dans lequel l'agencement d'attache (12) comprend une formation d'engagement (36) pour engager la partie de répartition de charge (22) lorsque la seconde formation de jonction (18) est reçue dans la cavité (24).

13. Ensemble de fixation (10) selon la revendication 12, dans lequel la partie de répartition de charge (22) comprend une première bride s'étendant radialement vers l'extérieur depuis la partie d'insertion (20), et la formation d'engagement (36) comprend une seconde bride.

14. Ensemble de fixation (10) selon l'une quelconque des revendications 12 ou 13, dans lequel un espace (38) est défini entre la seconde formation de jonction (18) et la formation d'engagement (36), l'agencement d'attache (12) étant joint à l'agencement d'insertion (14) par la première formation de jonction (16) étant reçue dans l'espace (38) entre la seconde formation de jonction (18) et la formation d'engagement (36).

15. Ensemble de fixation (10) selon l'une quelconque des revendications 7 à 14, dans lequel la première formation de jonction (16) comprend une paire des premiers éléments en saillie (28) disposés l'un en face de l'autre à travers la cavité de réception d'outil (24), et la seconde formation de jonction (18) comprend une paire des seconds éléments en saillie (32), qui s'étendent l'un en face de l'autre depuis l'élément de guidage (30).
